Europäisches Patentamt

European Patent Office

Office européen des brevets

(19)

(11) Numéro de publication: **0 311 510**
**A1**

## (12) DEMANDE DE BREVET EUROPEEN

(21) Numéro de dépôt: **88402511.5**

(22) Date de dépôt: **04.10.88**

(51) Int. Cl.⁴: **B 21 C 33/00**
**B 23 D 36/00**

(30) Priorité: **05.10.87 FR 8713740**

(43) Date de publication de la demande:
**12.04.89   Bulletin   89/15**

(84) Etats contractants désignés: **AT BE DE GB IT**

(71) Demandeur: **CLECIM**
**107 boulevard de la Mission Marchand**
**F-92402 Courbevoie Cédex  (FR)**

(72) Inventeur: **Bessey, Guy**
**4 rue des Hortensias**
**F-95430 Auvers sur Oise  (FR)**

**Bouchut, Jean-Yves**
**Rue de l'Entente**
**F-42290 Sorbiers  (FR)**

(74) Mandataire: **Le Brusque, Maurice et al**
**Cabinet Harlé et Phélip 21, rue de la Rochefoucauld**
**F-75009 Paris  (FR)**

(54)  **Procédé et installation de préparation de billettes de métal à filer.**

(57)  L'invention a pour objet un procédé de préparation de billettes de métal à partir de lopins (5) et une installation comprenant un four de réchauffage (2) des moyens (10) d'avancement des lopins (5, 51) l'un derrière l'autre suivant un trajet rectiligne traversant le four (2) et une cisaille à chaud (3) définissant un plan de cisaillage (Q) placé après la sortie du four (2).

Selon l'invention, on surveille le passage éventuel du plan de joint (6) entre le lopin (5) en cours de coupe et le lopin suivant (51), dans un plan fixe de repérage (P) coupant le trajet des lopins en un point placé à une distance (Y) en amont du plan de cisaillage (Q) au moins égale à la longueur (b) d'une billette, et, en cas de repérage d'un tel passage, on mesure en continu à partir de cet instant, la longueur (X) d'avancement du lopin (5) jusqu'à l'arrêt de ce dernier pour cisaillage, on calcule alors la longueur restante (a = Y-X) du lopin (15) en cours de coupe, puis la longueur prévisible du reste (c = a-nb) après la coupe d'un nombre entier (n) de billettes de longueur normale (b) et l'on compare ladite longueur restante (C) à une limite donnée (l) pour commander l'élimination des petits bouts de longueur inférieure à ladite limite.

FIG.1

EP 0 311 510 A1

Bundesdruckerei Berlin

# Description

## Procédé et installation de préparation de billettes de métal à filer

L'invention a pour objet un procédé de préparation de billettes de métal destinées spécialement à être filées dans une presse d'extrusion et couvre également une installation de préparation et un dispositif de repérage du plan de joint entre deux lopins successifs particulièrement adapté à la mise en oeuvre du procédé.

On réalise des profilés métalliques, en particulier à partir de métaux non ferreux, laiton, cuivre, etc..., dans des presses à filer qui comprennent un conteneur ménageant un logement fermé à une extrémité par une filière et dans lequel on place un morceau de métal appelé billette que l'on oblige à passer dans la filière par extrusion. La presse doit être alimentée par des billettes de longueur donnée, celle-ci dépendant évidemment des dimensions du conteneur et, de la longueur de profilé que l'on désire réaliser.

Les billettes alimentant la presse doivent donc être découpées à partir de barres métalliques appelées lopins qui ont une section transversale identique à celle du conteneur et une longueur de plusieurs mètres.

La presse est donc alimentée par une installation de préparation des billettes qui comprend un magasin de stockage des lopins, un dispositif de convoyage des lopins l'un derrière l'autre suivant un trajet généralement rectiligne, une cisaille placée à la sortie du dispositif de convoyage et un dispositif de chargement, par exemple un bras pivotant qui reçoit chaque billette à la sortie de la cisaille et la place dans l'axe du conteneur où elle est introduite par coulissement.

Depuis un certain temps, on réalise de plus en plus le cisaillement à chaud. L'installation comprend alors un four de réchauffage de forme tubulaire placé sur le trajet des lopins. Ainsi, une installation classique comprend une table de stockage, un dispositif de convoyage muni d'un pousseur des lopins sur un convoyeur rectiligne qui traverse un four tubulaire et une cisaille placée à la sortie du four et associée à un dispositif de chargement.

Pour que le lopin n'ait pas le temps de se refroidir avant son cisaillage, la cisaille est placée aussi près que possible de la porte de sortie du four et même, selon une disposition qui fait l'objet du brevet français n° 84.18811 de la même société, la cisaille peut être accolée au four dont la porte de sortie est constituée par l'une des mâchoires munie, à cet effet, d'un revêtement réfractaire de protection.

Après le cisaillage, le lopin est reculé dans le four pour s'écarter de la porte et permettre la fermeture de celle-ci.

La longueur du four dépend de son mode de chauffage, les fours à induction pouvant être plus courts. Dans tous les cas, cependant, le convoyeur supporte plusieurs lopins placés l'un derrière l'autre. Lorsque l'extrémité arrière du dernier lopin est assez avancée, on profite d'un arrêt de l'avancement, par exemple pour le cisaillage, pour reculer le pousseur de la longueur nécessaire à l'introduction sur le convoyeur d'un nouveau lopin venant du magasin; le pousseur repart ensuite en avant pour amener le nouveau lopin au contact du précédent et pousser l'ensemble. De la sorte, le four est traversé par un ensemble continu de lopins accolés l'un derrière l'autre.

En faisant ainsi avancer cet ensemble progressivement on peut couper dans le premier lopin de la file, un certain nombre de billettes, mais la longueur L du lopin ne correspond pas exactement à un multiple entier de la longueur b de la billette, d'autant plus que celle-ci peut varier en fonction des besoins. Il en résulte que, à la fin du cisaillage du lopin, il est exceptionnel, à moins de prendre des dispositions pour cela, que le plan de cisaillage coincide exactement avec le plan de joint, entre le lopin en fin de coupe et le lopin suivant. La dernière billette est alors formée de deux morceaux adjacents constituant respectivement l'extrémité arrière du lopin en cours de coupe et l'extrémité avant du lopin suivant.

Le fait que la billette soit en deux morceaux n'a pas d'inconvénient si ces derniers ont une longueur convenable. En revanche lorsque le rapport de la longueur du morceau à son diamètre est inférieur à une certaine limite, un tel morceau, appelé "petit bout" ne peut plus être manipulé sans risquer de se mettre en travers dans le dispositif de chargement ou dans le conteneur.

Les "petits bouts" de longueur inférieure à une limite donnée, par exemple la moitié du diamètre, et qui, selon la position du plan de cisaillage par rapport au plan de joint, peuvent se trouver d'un côté ou de l'autre de ce dernier, doivent être éliminés et l'on peut utiliser à cet effet plusieurs dispositions.

On peut, tout d'abord, effectuer la coupe de la billette à la longueur normale et, s'il apparaît un "petit bout", éliminer manuellement celui-ci. Cependant, la coupe risque de ne pas se faire dans de bonnes conditions et l'on est amené à filer une billette plus courte que la normale. En outre, l'élimination manuelle des "petits bouts" apporte une gêne au cycle de cisaillage et, pour éviter une perte de métal, nécessite leur recyclage. On préfère donc éviter autant que possible l'élimination effective des "petits bouts" et, au contraire, agir sur la longueur des billettes cisaillées, de façon à éviter l'apparition de restes trop courts.

Dans une disposition connue, par exemple, on mesure la longueur de chaque lopin au début du convoyage, on calcule à l'avance en fonction de la longueur normale de la billette la longueur du reste à prévoir et, si ce reste est trop court, on en répartit la longueur sur les différentes billettes en modifiant en conséquence les longueurs de celles-ci de façon que le plan de cisaillage de la dernière billette coincide avec le plan de joint.

Dans une autre procédé qui est décrit dans le document DE-A-3120464 , après avoir mesuré la longueur du lopin, on calcule à l'avance la longueur du reste à prévoir et, si celui-ci est trop court, avant le cisaillage de la dernière billette, on coupe le reste en deux morceaux de longueur supérieure à la limite de manipulation, dont l'un est mis en réserve et l'autre forme une billette avec un morceau complémentaire pris sur le lopin suivant, le morceau mis en réserve revenant alors dans le cycle d'avancement pour former à son tour une billette avec un second morceau complémentaire.

Dans tous les cas, cependant, il faut mesurer la longueur du lopin et en déduire la longueur du reste après la coupe d'un nombre entier de billettes de longueur voulue.

La longueur de la billette peut être déterminée assez facilement, par exemple en plaçant à la distance voulue en aval du plan de cisaillage, une butée qui commande l'arrêt de l'avancement et le fonctionnement de la cisaille (US-A-4559854).

La longueur du lopin peut être mesurée à la sortie du magasin et à son arrivée sur le convoyeur. Celui-ci peut être en effet muni d'une butée éclipsable ou d'un capteur fixe qui émet un signal au moment où l'extrémité avant du lopin passe à sa hauteur. Il suffit pour connaître la longueur du lopin, de repérer la position du pousseur appliqué contre son extrémité arrière au moment de l'émission du signal par le détecteur fixe. Cependant, cette mesure est effectuée à froid en amont du four et il faut donc tenir compte essentiellement des dilatations et d'autres effets secondaires pouvant agir sur la longueur du lopin. Les moyens de calculs des installations automatisées peuvent tenir compte de ces différents paramètres mais il en résulte, cependant, une certaine imprécision de la mesure.

On a également proposé de matérialiser le plan de joint, par exemple, en ramenant dans le four, au moyen du convoyeur, le lopin suivant celui qui est en cours de cisaillage, l'extrémité arrière du lopin en cours de coupe se séparant alors de l'extrémité avant du lopin suivant (US-A-4.559.854). On peut aussi munir le convoyeur d'un chemin de glissement possédant une extrémité articulée de façon à produire à la sortie du four un décalage du lopin en cours de coupe par rapport au lopin suivant encore dans le four. De tels dispositifs permettent de matérialiser le plan de joint et de mesurer sa position de façon très précise, mais ils sont placés obligatoirement entre la cisaille et le four, et nécessitent donc d'écarter la cisaille de la sortie du four, ce qui augmente la longueur du lopin qui doit être réenfourné après cisaillage et par conséquent le temps du cycle de cisaillage ainsi que le risque de refroidissement du lopin.

L'invention a pour objet un procédé et une installation n'ayant pas les inconvénients des dispositifs connus et permettant, d'une part, de calculer la longueur prévisible du morceau restant, suffisamment à l'avance pour éliminer les "petits bouts" et, d'autre part, d'effectuer cette mesure avec une grande précision.

L'invention s'applique spécialement aux procédés dans lesquels, pour découper une billette, on fait avancer l'ensemble des lopins placés l'un derrière l'autre sur un convoyeur jusqu'à ce que l'extrémité avant du lopin sortant du four ait dépassé le plan de cisaillage d'une longueur égale à la longueur (b) à donner à la billette et l'on commande alors l'arrêt de l'avancement puis le cisaillage et l'évacuation de la billette cisaillée.

Conformément à l'invention, on surveille en permanence, pendant l'avancement des lopins l'un derrière l'autre, le passage éventuel du plan de joint entre le lopin en cours de coupe et le lopin suivant dans un plan fixe de repérage coupant le trajet du lopin en un point placé à une distance (Y) en amont du plan de cisaillage au moins égale à la longueur (b) d'une billette et, en cas de repérage du passage du plan de joint, on mesure en continu la longueur (X) d'avancement du lopin à partir de l'instant du passage jusqu'à l'arrêt du lopin pour cisaillage, et l'on calcule alors la longueur restante ($a = Y-X$ du lopin en cours de coupe, en retranchant ladite longueur (X) de la distance (Y) entre le plan de repérage et le plan de cisaillement, puis la valeur algébrique ($c = a-nb$) de la longueur prévisible du morceau restant après la coupe d'un nombre entier (n) de billettes de longueur (b), en retranchant de ladite longueur restante du lopin les longueurs cumulées des billettes que l'on peut encore cisailler. On peut alors comparer, en valeur absolue, ladite longueur prévisible (c) à une longueur critique (l) correspondant à la limite de manipulation et, en fonction du résultat, déterminer les modalités du cisaillage pour éviter la production, d'un côté ou de l'autre du plan de joint, d'un "petit bout" de longueur (c) inférieure à ladite limite (l).

L'invention couvre également une installation de préparation de billettes comprenant, pour la mise en oeuvre du procédé, un moyen de mesure en continu de la longueur d'avancement du lopin en cours de coupe au moins depuis le passage de l'extrémité avant dans le plan de cisaillage jusqu'à l'arrêt pour cisaillage, des moyens de repérage du passage du plan de joint dans un plan de repérage coupant le trajet du lopin en un point placé à une distance (Y) du plan de cisaillage au moins égale à la longueur (b) à donner à la billette, un moyen de détermination de la longueur (X) d'avancement du lopin depuis l'instant du passage du plan de joint dans le plan de repérage jusqu'à l'arrêt pour cisaillage, et des moyens de calcul, d'une part, de la longueur restant ($a = Y-X$) du lopin après cisaillage de la billette et, d'autre part, de la valeur algébrique de la longueur prévisible ($c = a-nb$) du reste de lopin après cisaillage d'un nombre entier (n) de billettes de longueur (b) et des moyens de comparaison de la valeur absolue de ladite longueur de reste (c) avec une limite donnée (1) pour la commande de l'élimination des restes de longueur inférieure à ladite limite.

De façon avantageuse, le moyen de mesure de la longueur d'avancement du lopin comprend une butée de retenue de l'extrémité avant du lopin montée sur un support déplaçable suivant la direction d'avancement et un capteur de mesure des déplacements du support susceptible de fournir un signal fonction de l'avancement de la butée sous l'action du lopin. De préférence, la butée de retenue est montée à l'extrémité libre d'un bras pivotant autour d'un axe orthogonal à la direction d'avancement et associé à un capteur rotatif de mesure des déplacements angulaires dudit bras et, l'extrémité du bras pivotant portant la butée est avantageusement coudée de façon à pénétrer dans la cisaille en venant de l'aval et à placer la butée dans une position d'attente en amont du plan de cisaillage.

Il est avantageux, selon une disposition connue, de placer la cisaille à billettes immédiatement après la sortie du four et dans ce cas, selon une autre caractéristique importante de l'invention, on détecte le passage du plan de joint dans le plan de repérage (P) à l'intérieur même du four.

Il est alors préférable d'utiliser un dispositif de repérage du passage du plan de joint spécialement adapté à la mise en oeuvre du procédé et qui fait également l'objet de l'invention.

Selon l'invention, le dispositif de repérage comprend un moyen de nettoyage de l'extrémité arrière de chaque lopin avant la mise en place du lopin suivant, un dispositif d'émission-réception d'un faisceau de lumière suivant un plan fixe transveral à la direction de déplacement des lopins et constituant le plan de mesure, et un moyen de détection d'une variation brusque de la lumière réfléchie survenant au moment du passage dans le plan de mesure du plan de joint placé entre l'extrémité arrière nettoyée du lopin et l'extrémité avant brute du lopin suivant.

Selon une disposition particulièrement avantageuse, le dispositif d'émission-réception est monté sur un bras mobile transversalement à la direction de déplacement des lopins et susceptible de passer par un orifice ménagé dans le four de réchauffage des lopins de manière à venir presque au contact du lopin en cours de chauffage, ledit orifice étant muni d'une porte de fermeture amovible.

Mais l'invention sera mieux comprise par la description suivante d'un mode de réalisation particulier, donné à titre d'exemple, et représenté sur les dessins annexés.

La Figure 1 est une vue schématique d'ensemble d'une installation de préparation de billettes selon l'invention.

La Figure 2 représente le dispositif de nettoyage en coupe par un plan transveral à la direction d'avancement.

La Figure 3 représente le dispositif de repérage du plan de joint en coupe par un plan passant par l'axe du four.

La Figure 4 est une vue du dispositif de repérage en coupe transversale selon A-A de la Figure 3.

La Figure 5 est une vue schématique de dessus du dispositif de mesure.

La Figure 6 est une vue de face du dispositif de mesure.

La Figure 7 représente schématiquement les diverses opérations de mesure au cours de l'avancement d'un lopin et du cisaillage d'une billette.

La Figure 8 représente schématiquement des cas particuliers de cisaillage.

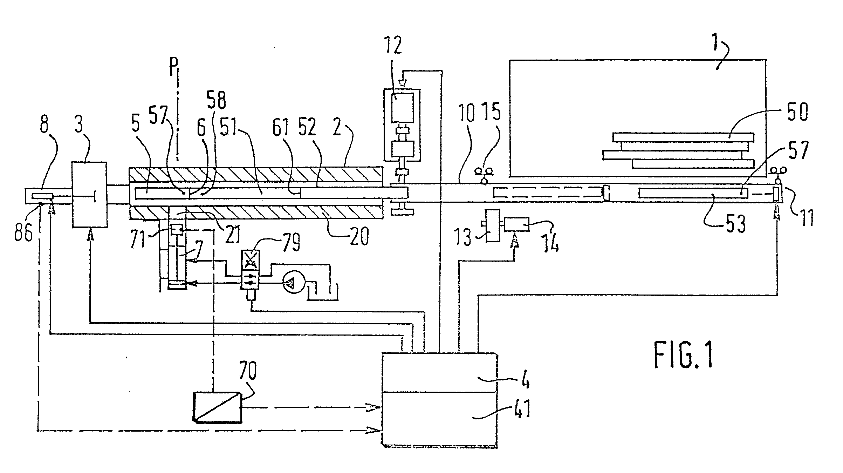

Sur la Figure 1, on a représenté schématiquement l'ensemble d'une installation de préparation de billettes selon l'invention.

D'une façon générale, l'installation comprend une table de stockage 1 associée à un convoyeur 10, un four de réchauffage 2 et une cisaille à chaud 3, l'ensemble des opérations étant commandé par un centre de contrôle 4.

Les lopins 5 emmagasinés sur la table de stockage 1 sont amenés l'un après l'autre sur le convoyeur 10 constitué par exemple par une table à rouleaux définissant un chemin d'acheminement rectiligne le long duquel se déplace un poussoir 11. Chaque fois qu'un nouveau lopin doit être amené sur le convoyeur 10, le poussoir 11 est reculé jusqu'à l'extrémité aval de celui-ci, puis avancé de nouveau, de façon à amener le nouveau lopin 53 au contact des lopins 5, 51, 52, déjà en place sur le convoyeur et à l'intérieur du four 2. Les mouvements du poussoir 11 sont commandés par un dispositif de motorisation 12 selon des ordres donnés par le centre de contrôle 4.

La longueur du four dépend des dispositions employées, mais il est courant, dans les fours à gaz, de placer un ou plusieurs lopins 51, 52 en réchauffage à la suite du lopin 5 en cours de coupe. Les lopins sont placés les uns à la suite des autres et leurs extrémités, respectivement, arrière et avant sont donc au contact dans des plans de joint 6, 61.

Le passage du plan de joint 6 dans un plan de mesure P est détecté par un dispositif de repérage 7 associé au four 2.

A la sortie du four 2, le premier lopin 5, poussé par les autres lopins 51, 52, passe dans la cisaille 3 à laquelle est associé un dispositif 8 de mesure de la longueur cisaillée.

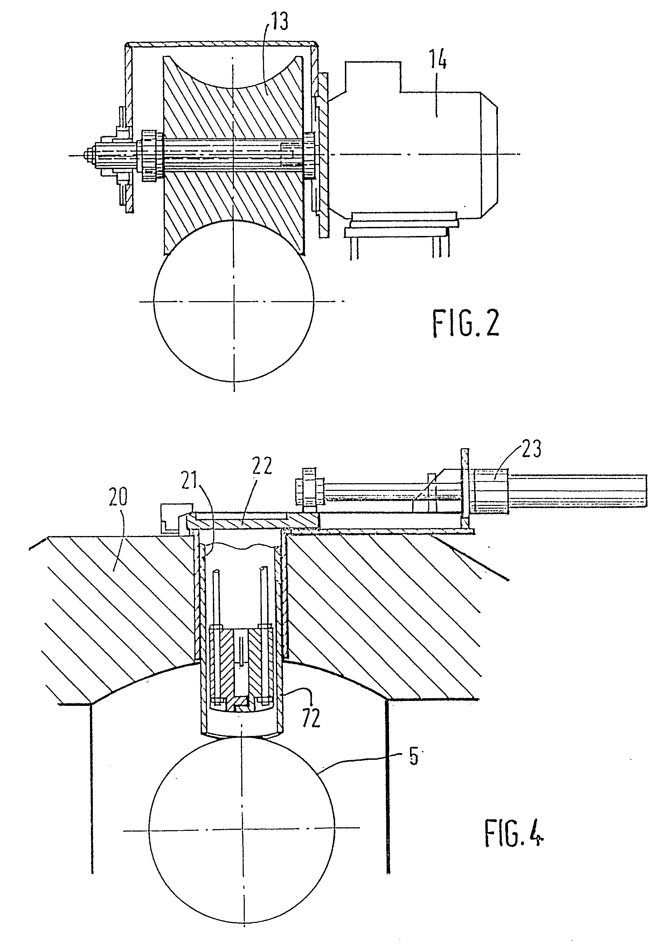

Selon l'une des caractéristiques de l'invention, le convoyeur 10 est associé à un dispositif de nettoyage constitué d'une brosse 13 entraînée par un moteur 14 et qui, comme on l'a représenté sur la Figure 2, a un profil arrondi de façon à s'adapter à la section du lopin. La brosse 13 est placée à la hauteur de la table de stockage 1 et, au cours de l'avancement de chaque nouveau lopin 53 sur le convoyeur 10, un capteur 15 permet d'arrêter le poussoir 11 lorsque la brosse 13 se trouve au niveau de l'extrémité arrière 57 du lopin 53 de façon à nettoyer celle-ci. Ainsi, dans la suite de lopins 5, 51, 52, chaque plan de joint 6 est encadré vers l'aval par une surface brillante constituant l'extrémité arrière 57 du premier lopin et vers l'amont par une surface mate constituée par l'extrémité avant brute 58 du lopin suivant.

Des moyens faciles à concevoir et commandés par le centre de contrôle 4 permettent d'approcher la brosse 13 du lopin au moment du brossage et de la ramener ensuite en position de repos par un mouvement transversal à l'axe de déplacement.

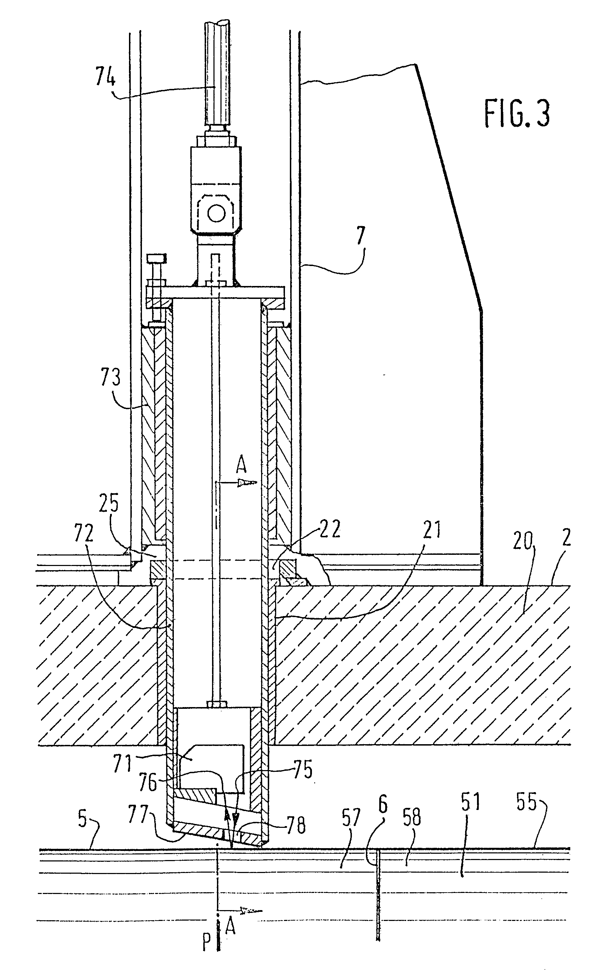

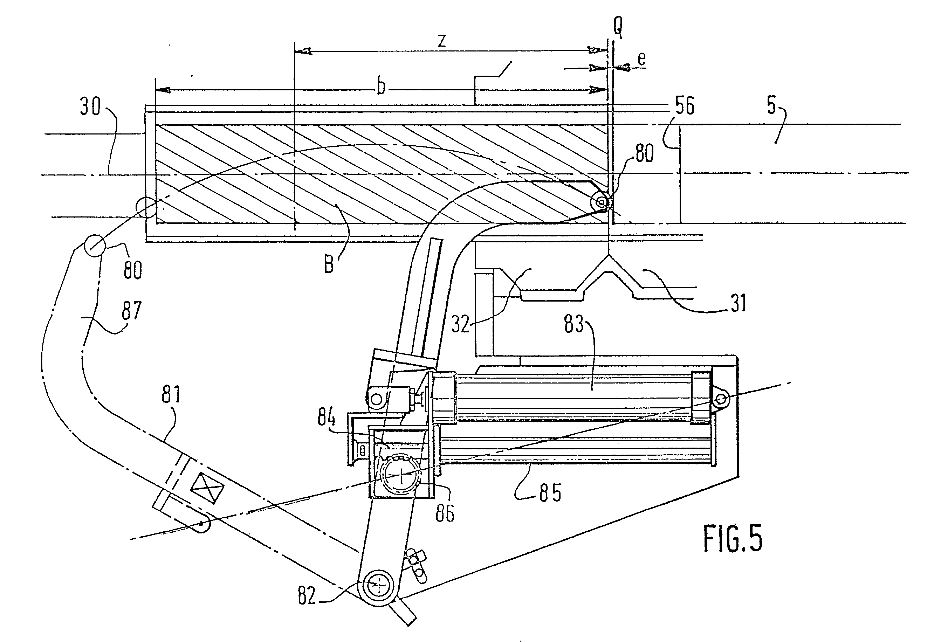

Le dispositif de repérage 7 qui, comme on le voit sur la Figure 1, est placé le long de la paroi du four 2 du côté de la sortie de celui-ci, est représenté en détail sur les Figures 3 et 4. Il comprend un capteur 71 monté à l'extrémité d'un bras 72 qui peut coulisser dans un support tubulaire 73 suivant une direction transversale à l'axe des lopins et du four 2. La paroi réfractaire de ce dernier est munie, à l'emplacement du dispositif de repérage 7, d'un orifice de passage 21 qui peut être fermé par une porte 22 actionnée par un vérin 23 et montée coulissante dans un espace 25 ménagé entre le support 73 et la paroi extérieure du four 2.

Le mouvement transversal du bras 72 est commandé par une tige 74 actionée par un vérin 7 dont les mouvements sont déterminés par un circuit hydraulique 79 commandé par le centre de contrôle 4. Ce dernier commande l'ouverture de la porte 22 et l'avancement du bras 72 au début de chaque cycle d'avancement du lopin. Le capteur 71 porté par le bras 72 est constitué d'une cellule d'émission-réception de lumière infra-rouge comprenant un émetteur 75 et un récepteur 76 d'un faisceau de lumière infra-rouge suivant un pinceau mince dirigé suivant un plan P orthogonal à l'axe de déplacement des lopins, l'extrémité du bras 72 étant avantageusement munie d'une plaque de protection 77 dans laquelle est ménagée une ouverture 78 formant diaphragme et qui peut venir à proximité immédiate et même au contact de la paroi 55 du lopin 5.

Le capteur 71 est relié à un dispositif 70, connu pour d'autres applications, qui permet d'enregistrer des variations d'intensité de la lumière réfléchie correspondant à une différence de brillance, et d'émettre un signal vers le centre de contrôle 4 en cas de détection d'une variation de lumière supérieure à un seuil donné.

Comme indiqué plus haut, l'extrémité arrière 57 de chaque lopin 5 est nettoyée par la brosse 13 alors que l'extrémité avant 58 du lopin suivant 51 reste brute.

De la sorte, au passage du plan de joint 6 dans le plan de repérage P suivant lequel est émise la lumière, le capteur 71 enregistre une variation de la lumière réfléchie due à la différence de brillance.

Bien entendu, le faisceau de lumière émis par le capteur ne peut être infiniment mince, mais il est possible, par étalonnage du capteur, de déterminer avec exactitude la position du plan du joint 6, en fixant le seuil de variation de la lumière pour lequel le signal est émis. L'ensemble du dispositif 7, 70, permet donc de connaître avec une grande précision l'instant de passage du plan de joint 6 dans le plan fixe de repérage P.

Si un tel capteur de lumière est particulièrement adapté pour fonctionner à l'intérieur du four, on pourrait cependant utiliser un autre type de capteur et, par exemple, un capteur inductif de type connu pour d'autres applications et permettant d'enregistrer des variations de courants électriques induits produits par des champs magnétiques variables. Dans un tel capteur, les champs des courants induits réagissant contre le champ magnétique d'excitation sont mesurés sélectivement au moyen de bobines réceptrices symétriques disposées au centre du champ d'excitation. Dans le mode de réalisation décrit précédemment, on pourrait donc remplacer le capteur de lumière par un capteur inductif centré dans le plan de repérage et comprenant deux bobines de mesure indépendantes, uniquement influencées par la réaction électrique émanant de la surface du lopin (5) et permettant de détecter une tension alternative de haute fréquence transmise ensuite à un amplificateur pour l'émission d'un signal au moment du passage du plan de joint dans le plan de symétrie des bobines. La brosse 13 serait alors supprimée, le nettoyage de l'extrémité 57 du lopin étant inutile, mais le reste de l'installation pourrait être inchangé.

A chaque cycle d'avancement du lopin pour la coupe d'une billette, le centre de contrôle 4 commande le retrait du bras 72 portant le capteur 71 et la fermeture de la porte 22, soit immédiatement après le repérage du passage du plan de joint, soit à la fin de l'avancement du lopin, si ce passage n'est pas repéré. Il est d'ailleurs possible de supprimer le repérage pendant la plus grande partie de l'avancement du lopin et de ne commander le fonctionnement du bras 72 qu'au moment où l'on approche de la fin de la coupe du lopin.

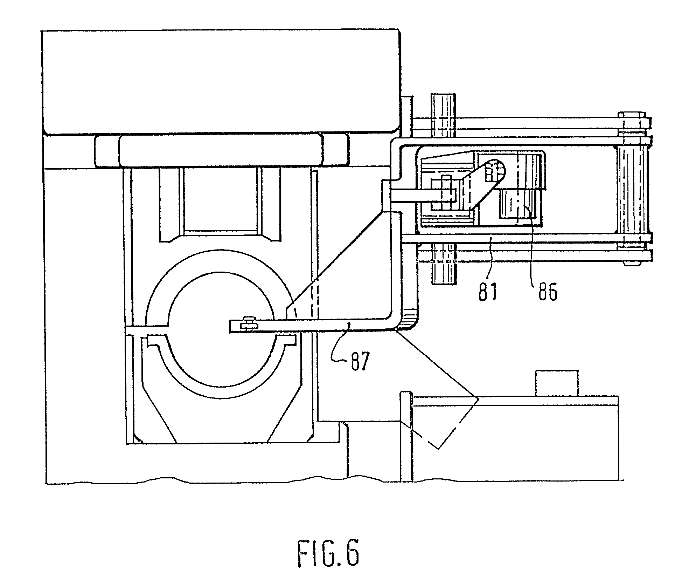

La cisaille 3 est réalisée de façon tout à fait classique et comprend donc, comme on l'a représenté partiellement sur les Figures 5 et 6, deux paires de mâchoires l'une fixe 31 et l'autre mobile 32, accolées suivant un plan de cisaillage Q. D'autre part, la cisaille 3 est associée à un dispositif 8 de mesure de l'avancement du lopin au-delà du plan de cisaillage Q qui est représenté en détail sur les Figures 5 et 6.

Comme on le voit sur la vue de dessus de la Figure 5, le dispositif de mesure 8 comprend un bras 81 portant à une extrémité une butée 80 et articulé à son autre extrémité autour d'un axe de pivotement 82 orthogonal à l'axe des lopins coïncidant avec l'axe 30 de la cisaille.

Le pivotement du bras 81 peut être commandé par un vérin 83 dont le corps et la tige sont articulés respectivement sur bâti fixe de la cisaille et sur le bras 81. D'autre part, la tige du vérin est associée à une crémaillère 84 qui peut coulisser dans un fourreau 85 solidaire du corps 83 du vérin de façon à suivre les mouvements de la tige du vérin. Le fourreau 85 porte, d'autre part, à son extrémité tournée vers le bras 81, un codeur rotatif 86 comprenant un pignon qui engrène avec la crémaillère 84.

Enfin, l'extrémité 87 du bras 81 forme un coude susceptible de pénétrer à l'intérieur de la mâchoire mobile 32 de la cisaille et sur une longueur suffisante pour que la butée 80 vienne légèrement en amont du plan de cisaillage Q.

De la sorte, lorsque le lopin 5 est enfourné dans le four 2, dans la position représentée sur la Figure 1, le vérin 83 commande le repliement du bras 81 pour amener la butée 80 dans la position de départ définie plus haut et représentée en trait plein sur la Figure 5. Lorsque le lopin 5 est avancé, son extrémité avant 56 vient au contact de la butée 80, un peu avant d'arriver dans le plan de cisaillage Q en repoussant, dès ce moment, le bras 81. Le vérin 83 est mis à la bâche de façon à suivre librement les mouvements du bras 81 de même que la crémaillère 84. Par conséquent, au fur et à mesure de l'avancement de la butée 80 sous l'action du lopin 5, la crémaillère 84 sort du fourreau en faisant tourner le capteur 86 dont la rotation donne ainsi une indication sur la position de la butée 80, le capteur pouvant facilement être étalonné.

On mesure ainsi au moyen du capteur rotatif 86 l'avancement z de l'extrémité avant du lopin au-delà du plan de cisaillage Q, le capteur 86 envoyant un signal de mesure à un calculateur 41 associé au centre de contrôle 4.

Lorsque la longueur d'avancement z au-delà du plan de cisaillage Q correspond à la longueur b à donner à la billette, le centre de contrôle 4 commande successivement :

- le dispositif 12 de motorisation du pousseur 11 pour déterminer l'arrêt de l'avancement,
- le fonctionnement de la cisaille 3,
- l'arrêt du vérin 83 de pivotement du bras 81 lorsque la butée 80 se trouve dans la position éclipsée représentée en trait mixte sur la figure 5.

Après la coupe, la billette B est prise en charge par un dispositif de chargement classique non représenté sur les dessins.

Après le cisaillage, le lopin 5 est réintroduit dans le four 2 et un nouveau cycle peut commencer. Le cisaillage des billettes successives se poursuit tant que le plan de joint 6 entre le lopin en cours de coupe et le suivant n'est pas passé dans le plan de mesure P. A l'instant où cet évènement se produit, la cellule 71 envoie un signal au calculateur 41 qui détermine la longueur d'avancement du lopin mesurée par le capteur 86 entre l'instant du passage et l'arrêt de l'avancement. On mesure ainsi la longueur X d'avancement du plan de joint 6 en aval du plan de mesure P.

On constate donc que, au lieu de calculer par différence la longueur prévisible du reste de lopin à partir de mesures de longueur faites avant l'entrée dans le four et par conséquent très longtemps à l'avance, cette longueur est déterminée grâce à l'invention, par une mesure effectuée peu de temps avant l'arrivée du plan de joint dans le plan de cisaillage. De la sorte, les risques d'erreur, dûs notamment aux dilatations, sont pratiquement éliminés.

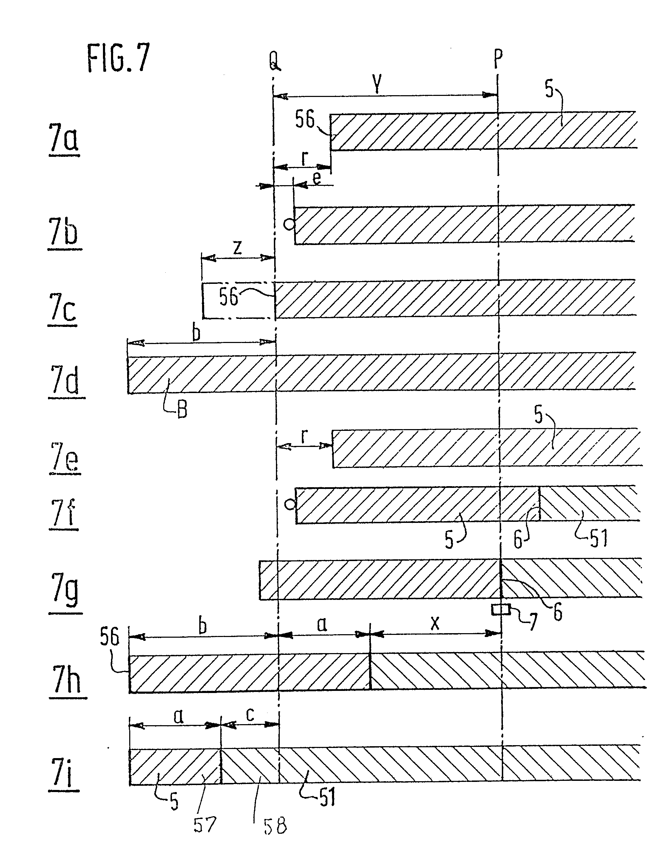

Sur la Figure 7, on a représenté schématiquement les étapes successives de la mesure. On a indiqué, en particulier, le plan de repérage P et le plan de cisaillage Q séparés par la distance fixe Y.

Au moment du démarrage du cycle, le lopin 5 est rentré dans le four et sa face avant 56 est donc reculée par rapport au plan de cisaillage Q d'une distance (r) supérieure à l'intervalle entre ce plan et l'extrémité de sortie du four. L'avancement du lopin 5 est alors commandé.

Dans la position 7b, la face avant 56 vient au contact de la butée 80 qui se trouvait en position d'attente, celle-ci étant placée, comme on l'a indiqué, en amont du plan de cisaillage Q, à une distance (e) inférieure à (r), par exemple 10 mm. De la sorte, on est sûr que la mesure sera en cours au moment du passage de la face avant 56 du lopin 5 dans le plan de cisaillage.

On continue l'avancement du lopin 5 et, à partir du moment représenté sur la Figure 7c, où la face avant 56 du lopin passe dans le plan de cisaillage Q, le centre de contrôle 4 associé au capteur 86, enregistre l'accroissement de la longueur (z) de lopin dépassant en aval du plan de cisaillage Q.

Au moment représenté sur la Figure 7d où cette longueur z devient égale à la longueur (b) à donner à la billette, le centre de contrôle 4 commande l'arrêt de l'avancement puis le fonctionnement de la cisaille et enfin le recul de la partie restante du lopin 5 de façon à la réintroduire dans le four dans la position représentée sur la Figure 7e.

Le cycle d'avancement recommence ainsi tant que le plan de joint 6 n'est pas passé dans le plan de repérage P.

Les Figures 7f à 7i représentent la coupe d'une dernière billette de longueur (b) dans le lopin 5.

Dans la position 7f, qui correspond au début de la mesure d'avancement par le capteur 7, le plan de joint 6 n'est pas encore passé dans le plan de repérage P car, sans cela, il aurait été repéré à la fin du cycle précédent. La mesure est donc en cours au moment représenté sur la Figure 7g où le capteur 7 repère le passage du joint 6 dans le plan de repérage P.

A partir de la mesure d'avancement du lopin effectuée par le capteur 86, le calculateur 41 peut donc calculer, d'une part, à partir de la position 7c, la longueur de dépassement (z) en aval du plan Q, et d'autre part, à partir de la position 7g, la longueur d'avancement du plan de joint 6 par rapport au plan de repérage P.

Lorsque la face avant 56 du lopin 5 arrive à la distance (b) du plan de cisaillage Q, dans la position 7h, le lopin s'arrête et l'on commande le cisaillage. Le calculateur 41 détermine à ce moment la longueur X d'avancement du plan de joint 6 depuis de l'instant 7g de passage dans le plan de repérage P, puis calcule la longueur restante (a) du lopin après le cisaillage de la billette, en effectuant la différence a = Y-X, et enfin la valeur algébrique de la différence a - b.

Si cette différence a - b est négative, comme on l'a représenté sur la Figure 7h, cela signifie qu'il est encore possible de couper une billette de longueur (b), mais que la billette suivante sera constituée par l'extrémité arrière 57 du lopin 5, de longueur (a) et par l'extrémité avant 58 du lopin suivant 51, de longueur (c) égale à la valeur absolue de la différence /a-b/.

Le calculateur 41 forme donc la valeur absolue de la différence /a-b/ pour la comparer à la longueur critique (l) à partir de laquelle le morceau restant ne serait plus manipulable. Dans le cas de la Figure 7i, par exemple, la longueur (c) est supérieure à la limite (l) et l'avancement des lopins peut donc se poursuivre normalement, la billette suivant étant constituée des deux morceaux 57 et 58 de longueurs respectives (a) et (c).

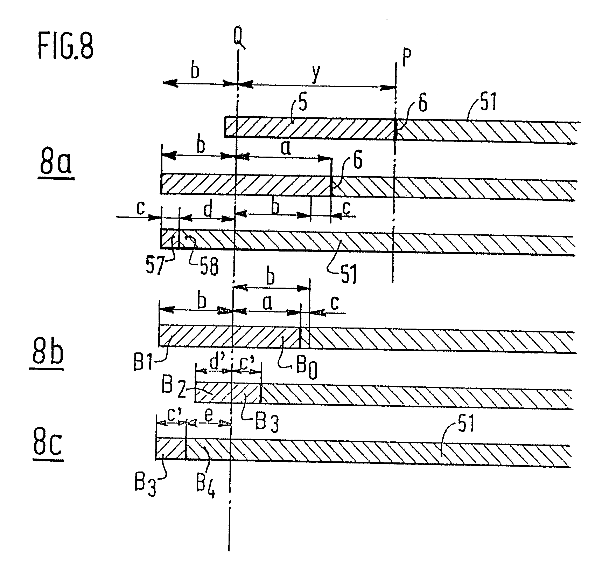

Mais bien d'autres cas sont possibles, certains ayant été représentés sur la Figure 8.

Tout d'abord, comme on l'a représenté sur la Figure 8a, si la longueur (b) à donner à la billette est in férieure à la moitié de la distance Y entre le plan de cisaillage Q et et le plan de repérage P, la différence a - b est positive, (a) étant supérieur à (b). Dans ce cas, il est théoriquement possible de couper une nouvelle billette de longueur (b), le morceau restant du lopin 5 ayant une longueur (c) égale à a-b.

Comme précédemment, si (c) est supérieure à la limite (l) choisie pour les "petits bouts", l'avancement peut se poursuivre normalement, la billette suivante étant constituée par l'extrémité arrière 57 du lopin 5, de longueur (c), et par l'extrémité avant 58 du lopin suivant 51, de longueur (d).

En revanche si, dans l'un ou l'autre cas, la longueur prévisible du morceau restant c = /a-b/ est inférieure à la limite (l), le centre de contrôle 4, informé par le calculateur 41, commande la suppression des petits bouts" selon la façon prévue dans l'installation.

Différents moyens connus peuvent être utilisés à cet effet.

On peut, par exemple, laisser apparaître le petit bout, le cisailler et l'enlever du cycle d'avancement des billettes, manuellement ou automatiquement.

Mais il est encore préférable de régler le cycle d'avancement du lopin pour empêcher l'apparition d'un petit bout et éviter de la sorte d'avoir à le cisailler et manipuler.

Les moyens qui viennent d'être décrits, de calcul à l'avance des longueurs prévisibles des différents morceaux permettent d'appliquer de façon avantageuse un procédé connu de suppression des petits bouts par mise en réserve d'un morceau de billette.

Dans le cas, par exemple, représenté sur la figure 8b, la mesure de la longueur prévisible (a) du morceau restant $B_0$ après la coupe d'une dernière billette $B_1$ de longueur normale montre que le morceau $B_0$ devra être complété par un "petit bout" de longueur c = /a-b/ inférieure à la limite de manipulation (l), ce que l'on veut éviter.

La billette $B_1$ est coupée normalement mais le centre de contrôle est programmé de façon à commander ensuite l'avancement des lopins non pas de (b) mais d'une longueur (d') déterminée de telle sorte que l'on ait simultanément:

$d' > 21$
$a-d' > 1$
$b-d' > 1$

On cisaille alors le morceau $B_2$ de longueur d' et on let met en réserve, par exemple de la façon décrite dans la demande de brevet français N° 86.15.349 de la même société.

Le morceau restant $B_3$ du lopin 5 en cours de coupe a donc une longueur c' = a-d' qui, grâce au choix de d', est supérieure à la limite de manipulation. On peut donc poursuivre l'avancement des lopins jusqu'à l'obtention de la longueur (b) et cisailler la billette suivante qui est constituée du morceau $B_3$ de longueur (c') et d'un morceau $B_4$ pris sur l'extrémité avant du lopin suivant 51 et ayant pour longueur:

$e = b-c' = b-a+d' = c+d'$

Si c = b-a est positif, comme dans le cas des figures 8b, 8c, (e) sera toujours supérieur à d' donc à la limite (l).

Si c = b-a est négatif, le "petit bout" étant constitué par l'extrémité arrière du lopin 5, on voit qu'il faut que d' soit supérieur à 21, comme indiqué plus haut, pour que le morceau $B_4$ ait une longueur suffisante.

Le morceau $B_2$ mis en réserve est ensuite replacé dans le cycle de cisaillage et complété par un morceau de longueur e' = b-d' de façon à obtenir une billette de longueur (b). On a vu que la longueur (d') est déterminée de telle sorte que cette longueur (e') soit également suffisante.

Dans les exemples qui viennent d'être décrits, la distance Y entre les plans de repérage P et de cisaillage Q était de l'ordre du double de la longueur (b) à donner aux billettes. Une telle distance convient au cas où la cisaille est accolée au four, selon la disposition faisant l'objet du brevet français N° 84-18811 de la même société, et est nécessaire pour répondre simultanément aux impératifs de conception et de réalisation, c'est-à-dire obtenir une bonne précision de mesure et implanter le dispositif de repérage (7) dans la structure du four (2).

On vient de voir, d'autre part, qu'une telle distance Y était suffisante pour mettre en oeuvre les moyens de suppresion des petits bouts.

Cependant, on pourrait aussi augmenter la distance Y en éloignant le plan de repérage P du plan de cisaillage Q de façon à faciliter l'intégration du dispositif de repérage (7) dans la structure du four (2) sans importantes modifications.

Il faudra, dans ce cas, tenir compte, dans le calcul de la longueur (c), du nombre (n) de billettes normales pouvant être coupées dans le lopin à partir de l'instant de repérage et on aura:

$c = a-nb$

(n) étant un nombre entier dépendant de la distance Y entre les plans de repérage P et de cisaillage Q.

Mais l'invention s'applique également aux installations dans lesquelles la cisaille est éloignée du four d'une certaine distance, par exemple de l'ordre de la longueur de la billette.

Il est alors possible d'implanter le dispositif de repérage(7) à l'extérieur du four, entre ce dernier et la cisaille.

Dans ce cas, le repérage du plan de joint (6) peut être effectué par des dispositifs qui n'auraient pas été utilisables à l'intérieur du four, comme un système à capteur à infra-rouge ou capacitif tel que décrit plus haut, ou bien par un système de vision comprenant une caméra à balayage de ligne, une source lumineuse et un analyseur d'images.

D'une façon générale, l'invention ne se limite donc pas aux détails du mode de réalisation qui vient d'être décrit, d'autres variantes pouvant être imaginées en employant des moyens équivalents et sans s'écarter du cadre de protection défini par les revendications.

En outre, si l'invention se prête particulièrement bien à la mise en oeuvre du procédé connu de coupe du reste en deux parties dont l'une est mise en réserve, les moyens que l'on a décrits pour le calcul de la longueur restante prévisible, restent intéressants même si l'on utilise d'autres moyens d'élimination des "petits bouts".

## Revendications

1. Procédé de préparation de billettes de métal à partir de lopins (5) en forme de barres allongées, dans lequel on fait avancer les lopins (5, 51) l'un derrière l'autre à travers un four de réchauffage (2) comprenant une entrée et une sortie puis une cisaille (3) définissant un plan de cisaillage (Q) placé après la sortie du four (2) et l'on commande l'arrêt de l'avancement et le fonctionnement de la cisaille lorsque la face avant (56) du lopin (5) sortant du four (2) a dépassé le plan de cisaillage (Q) d'une longueur égale à la longueur (b) à donner à la billette (B) qui est alors cisaillée puis évacuée, procédé dans lequel on détermine la longueur prévisible (c) du reste du lopin après la coupe d'un certain nombre de billettes de façon à prévoir l'apparition de petits bouts de longueur inférieure à une longueur critique (I), caractérisé par le fait que, pour déterminer la longueur prévisible (c) du reste du lopin, on surveille en permanence, pendant l'avancement des lopins (5, 51), l'un derrière l'autre, le passage éventuel du plan de joint (6) entre le lopin (5) en cours de coupe et le lopin suivant (51), dans un plan fixe de repérage (P) coupant le trajet des lopins en un point placé à une distance (Y) en amont du plan de cisaillage (Q) au moins égale à la longueur (b) d'une billette, et, en cas de repérage du passage du plan de joint (6), on mesure en continu à partir de cet instant, la longueur (X) d'avancement du lopin (5) jusqu'à l'arrêt de ce dernier pour cisaillage, on calcule alors, en retranchant ladite longueur (X) d'avancement de la distance (Y) entre le plan de repérage (P) et le plan de cisaillage (Q), la longueur restante (a = Y-X) du lopin et l'on en déduit la longueur prévisible du reste (c = a-nb) après la coupe d'un nombre entier (n) de billettes de longueur normale (b) en retranchant de ladite longueur restante (a) les longueurs cumulées (n x b) des billettes que l'on peut encore cisailler dans le lopin (5).

2. Procédé selon la revendication 1, caractérisé par le fait que l'on compare la valeur absolue de ladite longueur prévisible du reste (c) à une longueur critique (I) correspondant à la limite de manipulation et l'on détermine les modalités de cisaillage pour éviter la production, d'un côté ou de l'autre du plan de joint (6) d'un petit bout de longueur inférieure à ladite longueur critique (1).

3. Procédé selon la revendication 2, caractérisé par le fait que, pour éviter la production d'un petit bout non manipulable, au lieu d'avancer le lopin (5) d'une longueur (b) pour la coupe d'une dernière billette, on commande un avancement d'une longueur d' telle que l'on ait simultanément:

$$d' > 21$$
$$a-d' > 1$$
$$b-d' > 1$$

on cisaille alors un morceau $B_2$ de longueur d' et on le met en réserve, puis l'on avance le reste du lopin (5) et le lopin suivant (51) d'une longueur (b), pour le cisaillage d'une billette en deux morceaux, on replace le morceau $B_2$ mis en réserve dans le cycle de cisaillage et l'on avance ledit morceau $B_2$ suivi du lopin suivant (51) d'une longueur (b) pour un nouveau cisaillage d'une billette en deux morceaux.

4. Procédé selon l'une des revendications précédentes, caractérisé par le fait que l'on détecte le passage du plan de joint (6) dans le plan de repérage (P) à l'intérieur du four (2), ce dernier étant placé aussi près que possible de la cisaille (3).

5. Installation de préparation de billettes de métal à partir de lopins (5) en forme de barres allongées, comprenant un four de réchauffage (2) ayant une entrée et une sortie, des moyens (10) d'acheminement des lopins l'un derrière l'autre suivant un trajet rectiligne traversant le four (2) entre l'entrée et la sortie, une cisaille à chaud (3) définissant un plan de cisaillage (Q) en aval de la sortie du four, des moyens (10) de commande de l'avancement des lopins, un moyen (8) de commande de l'arrêt de l'avancement puis du cisaillage lorsque la face avant (56) du lopin sortant du four parvient à une distance en aval du plan de cisaillage égale à la longueur (b) à donner à la billette, un système de mesure de la longueur prévisible du reste de lopin après la coupe d'un certain nombre de billettes et des moyens de suppression des petits bouts ayant une longueur inférieure à une limite donnée (I), caractérisée par le fait que le système de mesure de la longueur prévisible du reste de lopin comprend un moyen (8, 4) de mesure en continu de la longueur d'avancement du lopin (5) en cours de coupe au moins depuis le passage de l'extrémité avant de celui-ci dans le plan de cisaillage (Q) jusqu'à l'arrêt pour cisaillage, des moyens (7) de repérage du passage éventuel du plan de joint (6) entre le lopin (5) en cours de coupe et le lopin suivant (51) dans un plan de repérage (P) coupant le trajet du lopin en un point placé à une distance (Y) du plan de cisaillage (Q) au moins égale à la longueur (b) à donner à la billette, un moyen (86, 4) de détermination de la longueur (X) d'avancement du plan de joint (6) depuis l'instant du passage dans le plan de repérage (P) jusqu'à l'arrêt pour cisaillage, des moyens (41) de calcul, d'une part de la longueur restante (a = Y-X) du lopin après cisaillage de la billette et, d'autre part de la valeur algébrique de la longueur prévisible (c = a-nb) du reste de lopin après cisaillage d'un nombre entier (n) de billettes de longueur (b) et des moyens (41) de comparaison de la valeur absolue de ladite longueur de reste (c) avec une limite donnée (I) pour la commande éventuelle de l'élimination d'un reste de longueur (c) inférieure à ladite limite (I).

6. Installation de préparation selon la revendication 5, caractérisée par le fait que le moyen (8) de mesure de la longueur d'avancement du lopin comprend une butée (80) de retenue de la face avant (56) du lopin (5) montée sur un support (81) déplaçable suivant la direction d'avancement et un capteur (86) de mesure des déplacements du support susceptible de fournir un signal fonction de l'avancement de la butée (80) sous l'action du lopin (5).

7. Installation de préparation selon la revendication 6,

caractérisée par le fait que la butée (80) de retenue est montée à l'extrémité libre (87) d'un bras (81) pivotant autour d'un axe (82) orthogonal à la direction d'avancement et associé à un capteur rotatif (86) de mesure du déplacement angulaire dudit bras (81).

8. Installation de préparation selon la revendication 7,
caractérisée par le fait que l'extrémité (87) du bras pivotant (81) portant la butée (80) est coudée de façon à pénétrer dans la cisaille (3) en venant de l'aval et à placer la butée (80) dans une position d'attente se trouvant en amont du plan de cisaillage (Q).

9. Installation de préparation selon l'une des revendications 5 à 8, caractérisée par le fait que le moyen (7) de repérage du plan de joint (6) est centré dans un plan de repérage (P) coupant le trajet du lopin (5) à l'intérieur du four (2).

10. Installation de préparation de billettes selon la revendication 9,
caractérisée par le fait que les moyens (7) de repérage du passage du plan de joint (6) comprennent un capteur (71) placé à l'extrémité d'un bras (72) déplaçable transversalement à l'axe du four (2) et passant dans un orifice (21) ménagé dans la paroi (20) du four (2) et muni d'une porte amovible permettant d'ouvrir l'orifice (21) pour approcher le capteur (71) à proximité immédiate du lopin (5) et de refermer ensuite la paroi (20) du four (2) après re trait du capteur (71).

11. Installation de préparation de billettes selon l'une des revendications 5 et 10,
caractérisée par le fait que les moyens de repérage (7) comprennent un capteur de lumière (71) comprenant une cellule (75, 76) d'émission-réception d'un faisceau de lumière suivant un plan transversal à l'axe du lopin (5) associée à des moyens de détection d'une variation de la lumière réfléchie et que les moyens (10) d'acheminement des lopins sont associés à un moyen (13) de nettoyage de l'extrémité arrière (57) de chaque lopin placé en amont du four (2) et susceptible de faire apparaître une différence de brillance entre ladite extrémité arrière nettoyée (57) et l'extrémité avant (58) restée brute du lopin suivant (51).

12. Installation de préparation de billettes selon l'une des revendications 5 et 10, caractérisée, par le fait que les moyens de repérage (7) comprennent un capteur inductif comprenant deux bobines de mesure de courants induits influencées par la réaction électrique émanant du lopin (5) et associées à des moyens de détection des courants induits pour le repérage du plan de joint (6).

13. Dispositif de repérage du passage, dans un plan de mesure fixe, du plan de joint (6) entre deux lopins métalliques (5, 51) se déplaçant l'un à la suite de l'autre sur un trajet rectiligne,
caractérisé par le fait qu'il comprend un moyen (13) de nettoyage de l'extrémité arrière (57) de chaque lopin (5), avant la mise en place du lopin suivant (51), un dispositif (71) d'émission-réception d'un faisceau de lumière suivant un plan fixe transversal à la direction de déplacement et constituant le plan de mesure (P) et un moyen (70) de détection d'une variation brusque de la lumière réfléchie, survenant au moment du passage dans le plan de mesure (P) du plan de joint (6) entre l'extrémité arrière nettoyée (57) du lopin (5) et l'extrémité avant brute (58) du lopin suivant (51).

14. Dispositif de repérage selon la revendication 13,
caractérisé par le fait que le dispositif (71) d'émission-réception est monté sur un bras (72) mobile transversalement à la direction de déplacement des lopins (5) et susceptible de passer par un orifice (21) ménagé dans la paroi (20) d'un four (2) de réchauffage des lopins de façon à venir presque au contact du lopin (5), ledit orifice (21) étant muni d'une porte de fermeture amovible (22).

FIG.1

FIG.2

FIG.4

FIG.3

FIG.5

FIG.6

# FIG.7

**7a**

**7b**

**7c**

**7d**

**7e**

**7f**

**7g**

**7h**

**7i**

FIG.8

8a

8b

8c

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | DE-A-3 120 464 (SCHWEIZERISCHE ALUMINIUM) * Revendications 1-7,12; page 29, ligne 9 - page 30, ligne 10; page 32, lignes 5-26; figures 2,3,7,10 * --- | 1-3,5,6 | B 21 C 33/00 B 23 D 36/00 |
| D,A | US-A-4 559 854 (JÜRGENS) * Colonne 3, ligne 51 - colonne 4, ligne 39; colonne 5, ligne 8 - colonne 6, ligne 12; figures 1,3 * --- | 1,2,5, 11,13 | |
| A | PATENT ABSTRACTS OF JAPAN, vol. 5, no. 22 (M-54)[694], 10 février 1981; & JP-A-55 150 914 (TOYOTA JIDOSHA KOGYO K.K.) 25-11-1980 * Résumé; figures * --- | 1 | |
| A | PATENT ABSTRACTS OF JAPAN, vol. 6, no. 101' (M-135)[979], 10 juin 1982; & JP-A-57 33 913 (HONDA GIKEN KOGYO K.K.) 24-02-1982 * Résumé; figures * --- | 1 | |
| A | PATENT ABSTRACTS OF JAPAN, vol. 11, no. 393 (M-654)[2840], 23 décembre 1987; & JP-A-62 162 410 (KAWASAKI STEEL CORP.) 18-07-1987 * Résumé; figures * --- | 1 | DOMAINES TECHNIQUES RECHERCHES (Int. Cl.4) B 21 C B 23 D |
| D,A | FR-A-2 574 322 (CLECIM) ----- | | |

Le présent rapport a été établi pour toutes les revendications

| Lieu de la recherche | Date d'achèvement de la recherche | Examinateur |
|---|---|---|
| LA HAYE | 11-01-1989 | THE K.H. |

EPO FORM 1503 03.82 (P0402)